# EUROPÄISCHE PATENTANMELDUNG

(11) **EP 1 195 416 A2**
(43) Veröffentlichungstag der Anmeldung: **10.04.2002**
(21) Anmeldenummer: 01119969.2
(22) Anmeldetag: 18.08.2001
(51) Int. Cl.: C09C 1/30, C09C 3/12, C08K 9/06

(54) **Polymerisierbare siliciumorganische Nanokapseln**

(30) Priorität: 05.10.2000 DE 10049632; 09.01.2001 DE 10100633
(71) Anmelder: Degussa AG, 40474 Düsseldorf (DE)
(72) Erfinder: Edelmann, Roland, 79664 Wehr (DE); Monkiewicz, Jaroslaw, Dr., 79618 Rheinfelden (DE)

(57) **Zusammenfassung**

Die vorliegende Erfindung betrifft polymerisierbare siliciumorganische Nanokapseln, bestehend aus einem nanoskaligen Kern A, welcher mindestens ein Oxid und/oder Mischoxid (KA-O) mindestens eines Metalls oder Halbmetalls der zweiten bis sechsten Hauptgruppe, der ersten bis achten Nebengruppe des Periodensystems der Elemente oder der Lanthanide enthält, und einer siliciumorganischen Umhüllung B, wobei die siliciumorganische Umhüllung B mindestens einen siliciumorganischen Bestandteil der allgemeinen Formel Ia

(Si'O-)ₓSi-R (Ia),

worin R für eine Vinyl- oder Allylgruppe steht und x eine Zahl von 0 bis 20 ist, wobei die noch freien Valenzen von Si durch SiO- und/oder -Z und die freien Valenzen von Si' durch SiO-, -R und/oder -Z gesättigt sind, die Gruppen Z gleich oder verschieden sind und Hydroxy- oder Alkoxy-Reste darstellen, und jedes Si bzw. Si' der Umhüllung B maximal eine Gruppe R trägt,
enthält und/oder der siliciumorganische Bestandteil der Umhüllung B über eine oder mehrere kovalente Bindungen der allgemeinen Formel Ib

(KA-O)-[(Si'O-)ₓSi-R] (Ib)

worin R für eine Vinyl- oder Allylgruppe steht und x eine Zahl von 0 bis 20 ist, wobei die noch freien Valenzen von Si durch (KA-O)-, SiO- und/oder -Z und die freien Valenzen von Si' durch (KA-O)-, SiO-, -R und/oder -Z gesättigt sind, die Gruppen Z gleich oder verschieden sind und Hydroxy- oder Alkoxy-Reste darstellen, und jedes Si bzw. Si' der Umhüllung B maximal eine Gruppe R trägt,
an den Kern A (KA-O) gebunden ist.

Ferner betrifft die vorliegende Erfindung ein neues Verfahren zur Herstellung polymerisierbarer siliciumorganischer Nanokapseln, wobei diese direkt in einer Kunstharzzusammensetzung anfallen. Ebenfalls lehrt die vorliegende Erfindung die Verwendung solcher Zusammensetzungen als Lack für die Erzeugung einer kratzfesten Beschichtung auf einem Substrat sowie entsprechend kratzfest beschichtete Artikel, insbesondere Dekorpapier.

## Beschreibung

Die vorliegende Erfindung betrifft polymerisierbare siliciumorganische Nanokapseln, bestehend aus einem nanoskaligen Kern A, der mindestens ein Oxid oder Mischoxid (KA-O) mindestens eines Metalls oder Halbmetalls der zweiten bis sechsten Hauptgruppe, der ersten bis achten Nebengruppe des Periodensystems der Elemente oder der Lanthanide enthält, und einer im Wesentlichen vollständigen, siliciumorganischen Umhüllung B, wobei diese durch Umsetzen mindestens einer organofunktionellen Siliciumverbindung, die eine reaktive, d. h. polymerisierbare organofunktionelle Gruppe und mindestens eine hydrolysierbare Gruppe bzw. mindestens eine Hydroxygruppe aufweist, und nanoskaligen Partikeln (KA-O) erhältlich sind.

Weiterhin betrifft die vorliegende Erfindung ein Verfahren zur Herstellung polymerisierbarer siliciumorganischer Nanokapseln, wobei diese direkt in einer Kunstharzzusammensetzung anfallen. Ebenfalls betrifft die vorliegende Erfindung die Verwendung solcher Zusammensetzungen als Lack für die Erzeugung einer kratzfesten Beschichtung auf einem Substrat sowie entsprechend kratzfest beschichtete Artikel.

Es ist bekannt, die Oberflächeneigenschaften von Sol- oder Gelpartikeln oder von Metall- bzw. Halbmetalloxiden durch eine Behandlung mit einem hydrolysierbaren Organosilan oder Organosiloxan zu modifizieren, wobei in der Regel eine nur einlagige Silanschicht an das Oxid- bzw. Solgelpartikel anbindet. So behandelte Oxide bzw. Sol- oder Gelpartikel, beispielsweise anorganische Pigmente oder Füllstoffe, können in eine Polymermatrix eingebracht werden, insbesondere in Folien sowie in Beschichtungsmittel und damit erzeugbare Beschichtungen. In der Regel ist jedoch die Kratzfestigkeit solcher Polymersysteme gering.

DE 198 46 660 offenbart nanoskalige, oberflächenmodifizierte Oxid- bzw. Mischoxidpartikel, die von kovalent an das Oxidpartikel gebundenen siliciumorganischen Gruppen umhüllt sind, wobei die organofunktionellen Gruppen als reaktive Gruppen beschrieben werden und üblicherweise nach außen orientiert sind, sodass sie durch Polymerisation mit dem Polymermaterial beim Aushärten des Präpolymers in die Polymermatrix eingebunden werden. Das Herstellungsverfahren solcher Beschichtungsmittel ist aufwendig, da das Organosilan und die oxidische Komponente alternierend in das Präpolymer eingearbeitet werden.

DE 198 46 659 besitzt den selben Zeitrang wie DE 198 46 660 und betrifft einen Schichtwerkstoff, der mit einer kratzfesten Kunstharzschicht versehen ist, welche ebenfalls nanoskalige, oberflächenmodifizierte Oxidpartikel enthält. DE 198 46 659 lehrt speziell den Einsatz von Acryloxyalkylsilanen zur Erzeugung einer Umhüllung nanoskaliger Oxidpartikel, welche reaktive, strahlenvernetzbare Gruppen besitzt. Die Herstellung des Beschichtungsmittels erfolgt hier ebenfalls durch eine zeitaufwendige Umsetzung einer nanoskaligen Kieselsäure mit 3-Methacryloxypropyltrimethoxysilan (DYNASYLAN® MEMO) in einer Acrylatformulierung in Gegenwart von Wasser, einer Säure sowie eines Netzmittels. Wiederum müssen die Komponenten in einer speziellen Reihenfolge alternierend zusammengebracht werden.

Darüber hinaus sind hydrolysierbare Silankomponenten mit ethylenisch ungesättigten Organogruppen meist hochpreisige Einsatzstoffe. Ferner neigt DYNASYLAN® MEMO bereits in Gegenwart geringer Spuren einer die Polymerisation in Gang setzenden Substanz oder Strahlung zur Reaktion, wodurch die Viskosität einer entsprechenden Zubereitung drastisch ansteigen kann. Zur Vermeidung der unerwünschten Polymerisation müssen Stabilisatoren zugesetzt werden. Daher ist es oft schwierig, die Handhabung der Einsatzstoffe und die Herstellung solcher Beschichtungssysteme zu beherrschen.

Weiterhin sind besagte Beschichtungsmittel vielfach hochviskos und enthalten meist nur einen geringen Anteil an Oxidpartikeln, was sich auf die Kratzfestigkeit der späteren Beschichtung auswirkt. Auch ist es schwierig, solche hochviskosen Beschichtungsmittel auf ein Substrat aufzutragen, insbesondere wenn es sich um dünne, zerreißbare Substrate handelt. Oft ist die Kratzfestigkeit so erhältlicher Beschichtungen verbesserungswürdig. Bei solchen hochviskosen Systemen ist darüber hinaus eine spezielle aufwendige Auftragevorrichtung erforderlich. Häufig werden solchen hochviskosen Beschichtungsmitteln auch Lösungsmittel zugegeben, die zur Erhöhung der organischen Emissionen (VOC-Problematik, VOC = "flüchtige organische Verbindungen") führen.

Aufgabe der vorliegenden Erfindung war es, weitere polymerisierbare siliciumorganisch modifizierte Nanopartikel einschließlich eines weiteren Herstellverfahrens zur Verfügung zu stellen, um Beschichtungsmittel für Kratzfestbeschichtungen in möglichst einfacher und wirtschaftlicher Weise herstellen zu können. Ein besonderes Anliegen der vorliegenden Erfindung war es, Artikel mit einer entsprechenden kratzfesten Kunstharzbeschichtung auszustatten.

Die Aufgabe wird erfindungsgemäß entsprechend den Angaben der Patentansprüche gelöst.

Überraschenderweise wurde nun gefunden, dass polymerisierbare siliciumorganische Nanokapseln in einfacher und wirtschaftlicher Weise erhältlich sind, wenn man
(i) mindestens ein nanoskaliges Oxid und/oder Mischoxid (KA-O) mindestens eines Metalls oder Halbmetalls der zweiten bis sechsten Hauptgruppe, der ersten bis achten Nebengruppe des Periodensystems der Elemente oder der Lanthanide
   mit
(ii) Vinyltrialkoxysilan und/oder Allyltrialkoxysilan, wobei Alkoxy für eine Methoxy-, Ethoxy-, n-Propoxy- oder i-Propoxygruppe,
   und
(iii) gegebenenfalls einem monomeren und/oder oligomeren Kieselsäureester, der Methoxy-, Ethoxy- oder i- bzw. n- Propoxygruppen trägt und einen mittleren Oligomerisierungsgrad von 1 bis 50 aufweist, bevorzugt ist ein mittlerer Oligomerisierungsgrad von 2 bis 10, besonders bevorzugt einer von 3 bis 5,
   und
(iv) gegebenenfalls einem organofunktionellen Siloxan, dessen Funktionalitäten gleich oder verschieden sind und jedes Si-Atom im Siloxan eine Funktionalität aus der Reihe Alkyl, d. h. linear, verzweigt oder cyclisch mit 1 bis 20 C-Atomen, vorzugsweise 1 bis 16 C-Atomen, Fluoralkyl, Cyanoalkyl, Isocyanoalkyl, Alkenyl, Aminoalkyl, Diaminoalkyl, Triaminoalkyl, Alkoxyalkyl, Hydroxyalkyl, Acylalkyl, Glycidyloxyalkyl, Acryloxyalkyl, Methacryloxyalkyl, Mercaptoalkyl, Ureidoalkyl, Aryl oder Alkoxy, vorzugsweise Methoxy, Ethoxy n-Propoxy oder i-Propoxy, trägt und die verbleibenden freien Valenzen der Si-Atome im Siloxan durch Methoxy- oder Ethoxy- oder Hydroxy-Gruppen gesättigt sind,
   und
(v) gegebenenfalls einem weiteren organofunktionellen Silan der allgemeinen Formel II

   R'ₛR"ᵣSiY₍₄₋ₛ₋ᵣ₎ (II),

   worin die Gruppen R' und R" gleich oder verschieden sind und jeweils eine lineare, verzweigte oder cyclische Alkylgruppe mit 1 bis 20 C-Atomen, vorzugsweise 1 bis 16 C-Atomen, eine Chloralkyl-, Bromalkyl-, Jodalkyl-, Isocyanoalkyl-, Cyanoalkyl-, Fluoralkyl- bzw. Perfluoralkyl-, Alkenyl-, Aryl-, Acylalkyl-, Acryloxyalkyl-, Methacryloxyalkyl-, Sulfan-, Mercaptoalkyl-, Thiacyamidalkyl-, Glycidyloxyalkyl-, Aminoalkyl-, Diaminoalkyl-, Triaminoalkyl-, Carbonatoalkyl- oder eine Ureidoalkyl-Gruppe darstellen, wobei die jeweilige Alkylen-Gruppen 1 bis 6 C-Atome enthält, R" vorzugsweise ein Methyl ist, Y eine Methoxy-, Ethoxy-, i-Propoxy-, n-Propoxy- oder 2-Methoxyethoxy-Gruppe darstellt und s gleich 1 oder 2 oder 3 und r gleich 0 oder 1 oder 2 sind, mit der Maßgabe (s+r) ≤ 3,
in situ in einem härtbaren Kunstharz oder einer Vorläuferstufe eines härtbaren Kunstharzes, d. h. einem flüssigen Präpolymer oder einem Gemisch entsprechender Präpolymere, zum Beispiel einem Acrylat, Methacrylat, Epoxid, Polyurethan und/oder ungesättigtem Polyester, umsetzt. Nach dieser Verfahrensweise erhält man in vorteilhafter Weise die polymerisierbaren siliciumorganischen Nanokapseln gleichzeitig in das Präpolymer homogen eingearbeitet.

Ferner wurde überraschenderweise gefunden, dass man die folgende Umsetzung zur in-situ-Herstellung einer polymerisierbare siliciumorganische Nanokapseln enthaltenden Beschichtungszusammensetzung in besonders vorteilhafter Weise durchführen kann, wenn man ein Organosilan, das eine reaktive, polymerisierbare organofunktionelle Gruppe, wie eine Vinyl- oder Allylgruppe oder eine solche, wie sie aus DE 198 46 660 sowie DE 198 46 659 zu entnehmen ist, und mindestens eine hydrolysierbare Gruppe, vorzugsweise Methoxy, Ethoxy, i- oder n-Propoxy oder 2-Methoxyethoxy, oder mindestens eine Hydroxygruppe enthält, und gegebenenfalls oben genannte Komponenten (iii) bis (v) zunächst in ein flüssiges, härtbares Kunstharz oder einer Vorläuferstufe eines Kunstharzes zusammen mit einem Katalysator, gegebenenfalls Netzmittel und Wasser einbringt, mischt und erst anschließend die Komponente (i) unter guter Durchmischung zusetzt sowie entstehenden Hydrolysealkohol aus dem System abzieht, d. h., dass man beim vorliegenden Verfahren gegenüber der Lehre aus DE 198 46 659 und DE 198 46 660 die siliciumorganischen Komponenten und die oxidische Komponente nicht alternierend in das Präpolymer einarbeitet.

Das vorliegende Verfahren ist überraschend und vorteilhaft, da so in einfacher und wirtschaftlicher Weise ein polymerisierbare siliciumorganische Nanokapseln enthaltendes Beschichtungsmittel für Kratzfestbeschichtungen erhältlich ist, das vergleichsweise niedrigviskos und homogen ist, wobei das Beschichtungsmittel einen besonders hohen Anteil an polymerisierbaren siliciumorganischen Nanopartikel enthalten kann.

Im Allgemeinen hydrolysieren bzw. kondensieren dabei hydrolysierbare Gruppen der siliciumorganischen Komponenten miteinander und umhüllen die oxidischen Nanopartikel (KA-O). Gegebenenfalls können die hydrolysierbaren Gruppen oder Hydroxygruppen mit an der Oberfläche der oxidischen Nanopartikel (KA-O) befindlichen Hydroxygruppen oder mit freien Valenzen siliciumorganischer Komponenten der Umhüllung B unter Ausbildung einer kovalenten Bindung kondensieren. Es ist hervorzuheben, dass insbesondere Vinyltrimethoxysilan (DYNASYLAN® VTMO) gegenüber Vinyltriethoxysilan (DYNASYLAN® VTEO) ein nochmals deutlich verbessertes Hydrolyseverhalten, d. h. Herstellverhalten zeigt.

Geeigneterweise erfolgt beim vorliegenden Verfahren die besagte Umsetzung in Gegenwart definierter Mengen Wasser. Bevorzugt setzt man pro Mol einer hydrolysierbaren, Si-gebundenen Gruppe der siliciumorganischen Komponenten 0,5 bis 6 Mol Wasser, besonders vorzugsweise 0,5 bis 4 Mol Wasser, ganz besonders vorzugsweise 1 bis 1,5 Mol Wasser, ein. Ferner ist der Einsatz eines Katalysators sowie eines Netzmittels bevorzugt.

Insbesondere lassen sich beim vorliegenden Verfahren durch den Einsatz von Vinyltrimethoxysilan oder Vinyltriethoxysilan Beschichtungszusammensetzungen mit hohen Feststoffgehalten, hoher Transparenz und guten Verarbeitungseigenschaften erhalten.

Im Allgemeinen strebt man bei solchen, dilatanten Beschichtungssystemen eine Viskosität bis 2.500 mPa s an. Vorzugsweise besitzen erfindungsgemäße lösemittelfreie Beschichtungsmittel eine Viskosität von > 500 bis 2.000 mPa s, besonders vorzugsweise von 800 bis 1.000 mPa s. Geeigneterweise betragen dabei die Gehalte an polymerisierbaren nanoskaligen Kapseln in erfindungsgemäßen Beschichtungsmitteln zwischen 5 und 60 Gew.-%.

Ferner erhält man beim vorliegenden Verfahren im Wesentlichen vollständig und mehrschichtig siliciumorganisch umhüllte nanoskalige Oxid- bzw. Mischoxidpartikel, so genannte polymerisierbare siliciumorganische Nanokapseln, die direkt in vorteilhafter Weise fein dispergiert in einem härtbaren Kunstharz oder einer Vorläuferstufe eines härtbaren Kunstharzes anfallen und das vergleichsweise niedrigviskose Produktgemisch als solches oder als Basis für Lacke zur kratzfesten Beschichtung von Oberflächen verwendet werden kann.

Erfindungsgemäße Beschichtungsmittel bzw. Lacke können als weitere Komponenten beispielsweise Initiatoren für die photochemische Härtung bzw. UV-Härtung, wie Darocur® 1173, Lucirin® TPO-L, Stabilisatoren, wie HALS-Verbindungen, Tinuvine® sowie Antioxidantien, wie Irganox®^{,} enthalten.

Durch die vorliegende Herstellungsweise ist ein lösemittelfreier, vergleichsweise niedrigviskoser Lack bzw. eine Zusammensetzung mit erfindungsgemäßen polymerisierbaren, siliciumorganischen Nanokapseln in einfacher und wirtschaftlicher Weise direkt zugänglich.

Das Beschichten eines Substrats mit der vorliegenden Zusammensetzung kann in der Regel aufgrund der geringen Viskosität der Zusammensetzung mit vergleichsweise geringem Aufwand erfolgen.

Darüber hinaus kann die vorliegende, vergleichsweise niedrigviskose Zusammensetzung bzw. der Lack mit einem unerwartet hohen Anteil an siliciumorganischen Nanokapseln ausgestattet werden, wobei man bis zu 60 Gew.-% Oxid- bzw. Mischoxid-Gehalt, bezogen auf die Beschichtungszusammensetzung, in das System einbringen kann.

Die Härtung der Beschichtung erfolgt geeigneterweise photochemisch durch UV-Bestrahlung oder durch Bestrahlung mit Elektronenstrahlen. Üblicherweise führt man die Bestrahlung bei einer Temperatur von 10 bis 60 °C, vorteilhaft bei Umgebungstemperatur, durch.

Erfindungsgemäß beschichtete Substrate bzw. Artikel zeichnen sich in der Regel durch eine hervorragende Kratzfestigkeit gemäß DIN 53 799 (Hartmetallkugel) sowie durch eine gute Abriebbeständigkeit (DIN 52 347) aus.

So kann man insbesondere mit erfindungsgemäßen vinyl- oder allylfunktionelle siliciumorganische Nanokapseln enthaltenden Beschichtungsmitteln eine ausgezeichnete Kratzfestigkeit erzielen.

Gegenstand der vorliegenden Erfindung ist daher ein Verfahren zur Herstellung einer Zusammensetzung auf der Basis eines aushärtbaren Kunstharzes oder einer Vorläuferstufe eines härtbaren Kunstharzes, die polymerisierbare siliciumorganische Nanokapseln enthält, indem man das härtbare Kunstharz oder dessen Vorläuferstufe vorlegt und erwärmt, Katalysator, gegebenenfalls Netzmittel und definierte Mengen Wasser zugibt, mindestens eine siliciumorganische Komponente der allgemeinen Formel III

R¹R² ₙSiX₃₋ₙ (III),

wobei die Gruppen R¹ und R² gleich oder verschieden sind, R¹ für eine Alkenylgruppe mit 2 bis 18 C-Atomen, eine Aryl-, Alkylaryl-, eine Arylalkyl-, eine Acylalkyl-, eine Aminoalkyl-, eine Diaminoalkyl-, eine Triaminoalkyl-, eine Alkyloxyalkyl-, eine Acylalkyl-, eine Cyanoalkyl-, eine Isocyanoalkyl-, eine Glycidyloxyalkyl-, eine Acyloxyalkyl-, eine Acryloxyalkyl-, eine Mercaptoalkyl-, eine Polysulfidalkyl- oder eine Methacryloxyalkylgruppe steht, R² die gleiche wie für R¹ aufgezählte Bedeutung besitzt oder für eine lineare, verzweigte oder cyclische Alkylgruppe mit 1 bis 20 C-Atomen, vorzugsweise 1 bis 16 C-Atomen, die gegebenenfalls substituiert ist, steht,
und
gegebenenfalls einem monomeren und/oder oligomeren Kieselsäureester, der Methoxy-, Ethoxy-, n-Propoxy- oder i-Propoxygruppen trägt und einen mittleren Oligomerisierungsgrad von 1 bis 50 aufweist,
und
gegebenenfalls einem organofunktionellen Siloxan, dessen Funktionalitäten gleich oder verschieden sind und jedes Si-Atom im Siloxan eine Funktionalität aus der Reihe Alkyl, d. h. linear, verzweigt oder cyclisch mit 1 bis 16 C-Atomen, Fluoralkyl, Cyanoalkyl, Isocyanoalkyl, Alkenyl, Aminoalkyl, Diaminoalkyl, Triaminoalkyl, Alkoxyalkyl, Hydroxyalkyl, Acylalkyl, Glycidyloxyalkyl, Acryloxyalkyl, Methacryloxyalkyl, Mercaptoalkyl, Ureidoalkyl, Aryl oder Alkoxy, vorzugsweise Methoxy oder Ethoxy, trägt und die verbleibenden freien Valenzen der Si-Atome im Siloxan durch Methoxy- oder Ethoxy- oder Hydroxy-Gruppen gesättigt sind, zugibt, mischt und nachfolgend mindestens ein nanoskaliges Oxid und/oder Mischoxid (KA-O) mindestens eines Metalls oder Halbmetalls der zweiten bis sechsten Hauptgruppe, der ersten bis achten Nebengruppe des Periodensystems der Elemente oder der Lanthaniden unter guter Durchmischung zusetzt, wobei man den durch Hydrolyse bzw. Kondensation entstehenden Alkohol aus dem System entfernt.

Weiterhin sind Gegenstand der vorliegenden Erfindung polymerisierbare siliciumorganische Nanokapseln, bestehend aus einem nanoskaligen Kern A, welcher mindestens ein Oxid und/oder Mischoxid (KA-O) mindestens eines Metalls oder Halbmetalls der zweiten bis sechsten Hauptgruppe, der ersten bis achten Nebengruppe des Periodensystems der Elemente oder der Lanthanide enthält, und einer siliciumorganischen Umhüllung B, wobei die siliciumorganische Umhüllung B mindestens einen siliciumorganischen Bestandteil der allgemeinen Formel la

(Si'O-)ₓSi-R (Ia),

worin R für eine Vinyl- oder Allylgruppe steht und x eine Zahl von 0 bis 20 ist, wobei die noch freien Valenzen von Si durch SiO- und/oder -Z und die freien Valenzen von Si' durch SiO-, -R und/oder -Z gesättigt sind, die Gruppen Z gleich oder verschieden sind und Hydroxy- und/oder Alkoxy-Reste darstellen, und jedes Si bzw. Si' der Umhüllung B maximal eine Gruppe R trägt,
enthält und/oder der siliciumorganische Bestandteil der Umhüllung B über eine oder mehrere kovalente Bindungen der allgemeinen Formel Ib

(KA-O)-[(Si'O-)ₓSi-R] (Ib)

worin R für eine Vinyl- oder Allylgruppe steht und x eine Zahl von 0 bis 20, vorzugsweise von 1 bis 15, besonders vorzugsweise von 2 bis 10, ist, wobei die noch freien Valenzen von Si durch (KA-O)-, SiO- und/oder -Z und die freien Valenzen von Si' durch (KA-O)-, SiO-, -R und/oder -Z gesättigt sind, die Gruppen Z gleich oder verschieden sind und Hydroxy- und/oder Alkoxy-Reste darstellen, und jedes Si bzw. Si' der Umhüllung B maximal eine Gruppe R trägt,
an den Kern A (KA-O) gebunden ist.

Als Alkoxy-Reste der Gruppen Z sind solche mit einem lineare, cyclischen oder verzweigten Alkylrest mit 1 bis 18 C-Atomen bevorzugt, insbesondere sind Methoxy-, Ethoxy-, i- oder n-Propoxygruppen bevorzugt.

Bei erfindungsgemäßen polymerisierbaren siliciumorganischen Nanokapseln beträgt das Gewichtsverhältnis zwischen Kern A und Umhüllung B vorzugsweise 1 : 1 bis 4 : 1.

Geeigneterweise besteht der Kern A der erfindungsgemäßen polymerisierbaren siliciumorganischen Nanokapseln aus mindestens einem Oxid und/oder Mischoxid (KA-O), Oxidhydroxide sind hiermit eingeschlossen, aus der Reihe der Elemente Si, Al, Ti und/oder Zr, beispielsweise SiO₂, wie pyrogen hergestellte Kieselsäure, Silikate, Al₂O₃, Aluminiumhydroxid, Alumosilikate, TiO₂, Titanate, ZrO₂ oder Zirkonate.

Einschließlich der Umhüllung B weisen erfindungsgemäße polymerisierbare siliciumorganische Nanokapseln vorzugsweise einen mittleren Durchmesser von 10 bis 400 nm, besonders vorzugsweise 20 bis 100 nm, auf.

Gleichfalls sind Gegenstand der vorliegenden Erfindung polymerisierbare siliciumorganische Nanokapseln, die erhältlich sind durch eine Umsetzung von
(i) mindestens einem nanoskaligen Oxid und/oder Mischoxid (KA-O) mindestens eines Metalls oder Halbmetalls der dritten bis sechsten Hauptgruppe, der ersten bis achten Nebengruppe des Periodensystems der Elemente oder der Lanthanide
   mit
(ii) einem Vinyltrialkoxysilan und/oder einem Allyltrialkoxysilan, wobei Alkoxy für eine Methoxy-, Ethoxy-, n-Propoxy- oder i-Propoxygruppe steht,
   und
(iii) gegebenenfalls einem monomeren und/oder oligomeren Kieselsäureester, welcher Methoxy- oder Ethoxy- oder n- bzw. i-Propoxygruppen trägt und einen mittleren Oligomerisierungsgrad von 1 bis 50 aufweist, beispielsweise Tetramethoxysilan, Tetraethoxysilan, wie DYNASIL® A, Tetrapropoxysilan, wie DYNASIL® P, oder ein oligomeres Ethylsilikat, wie DYNASIL® 40,
   und
(iv) gegebenenfalls einem organofunktionellen Siloxan, dessen Funktionalitäten gleich oder verschieden sind und jedes Si-Atom im Siloxan eine Funktionalität aus der Reihe Alkyl, d. h. linear, verzweigt oder cyclisch mit 1 bis 20 C-Atomen, Fluoralkyl, Cyanoalkyl, Isocyanoalkyl, Alkenyl, Aminoalkyl, Diaminoalkyl, Triaminoalkyl, Alkoxyalkyl, Hydroxyalkyl, Acylalkyl, Glycidyloxyalkyl, Acryloxyalkyl, Methacryloxyalkyl, Mercaptoalkyl, Ureidoalkyl, Aryl oder Alkoxy, vorzugsweise Methoxy oder Ethoxy, trägt und die verbleibenden freien Valenzen der Si-Atome im Siloxan durch Methoxy- oder Ethoxy- oder Hydroxy-Gruppen gesättigt sind, bevorzugt sind solche Siloxane mit einem mittleren Oligomerisierungsgrad von 1 bis 20, vorzugsweise mit einem mittleren Oligomerisierungsgrad von 2 bis 10, wie sie insbesondere aus den deutschen Patentanmeldungen 199 55 047.6, 199 61 972.7, EP 0 518 057, EP 0 590 270, EP 0 716 127, EP 0 716 128, EP 0 760 372, EP 0 814 110, EP 0 832 911, EP 0 846 717, EP 0 846 716, EP 0 846 715, EP 0 953 591, EP 0 955 344, EP 0 960 921, EP 0 978 525, EP 0 930 342, EP 0 997 469, EP 1 031 593 und EP 0 075 697 zu entnehmen sind,
   und
(v) gegebenenfalls einem weiteren organofunktionellen Silan der allgemeinen Formel II

   R'ₛR"ᵣSiY₍₄₋ₛ₋ᵣ₎ (II),

   worin die Gruppen R' und R" gleich oder verschieden sind und jeweils eine lineare, verzweigte oder cyclische Alkylgruppe mit 1 bis 20 C-Atomen, eine Chloralkyl-, Bromalkyl-, Jodalkyl-, Isocyanoalkyl-, Cyanoalkyl-, Fluoralkyl-bzw. Perfluoralkyl-, Alkenyl-, Aryl-, Acylalkyl-, Acryloxyalkyl-, Methacryloxyalkyl-, Sulfan-, Mercaptoalkyl-, Thiacyamidalkyl-, Glycidyloxyalkyl-, Aminoalkyl-, Diaminoalkyl-, Triaminoalkyl-, Carbonatoalkyl- oder eine Ureidoalkyl-Gruppe darstellen, wobei die jeweilige Alkylen-Gruppen 1 bis 6 C-Atome enthält, R" vorzugsweise ein Methyl ist, Y eine Methoxy-, Ethoxy-, i-Propoxy-, n-Propoxy- oder 2-Methoxyethoxy-Gruppe darstellt und s gleich 1 oder 2 oder 3 und r gleich 0 oder 1 oder 2 sind, mit der Maßgabe (s+r) ≤ 3,
   welche in situ in einem im Wesentlichen flüssigen, härtbaren Kunstharz oder einer Vorläuferstufe eines Kunstharzes erfolgt.

Ferner ist Gegenstand der vorliegenden Erfindung ein Verfahren zur Herstellung von polymerisierbaren siliciumorganischen Nanokapseln sowie zur Herstellung einer polymerisierbare siliciumorganische Nanokapseln enthaltenden Zusammensetzung, das dadurch gekennzeichnet ist, dass man
(i) mindestens ein nanoskaliges Oxid und/oder Mischoxid (KA-O) mindestens eines Metalls oder Halbmetalls der dritten bis sechsten Hauptgruppe, der ersten bis achten Nebengruppe des Periodensystems der Elemente oder der Lanthanide
   mit
(ii) einem Vinyltrialkoxysilan und/oder einem Allyltrialkoxysilan, wobei Alkoxy für eine Methoxy-, Ethoxy- oder n- bzw. i-Propoxygruppe steht,
   und
(iii) gegebenenfalls einem monomeren und/oder oligomeren Kieselsäureester, der Methoxy- , Ethoxy- oder n- bzw. i-Propoxygruppen trägt und einen Oligomerisierungsgrad von 1 bis 50 aufweist, bevorzugt ist ein mittlerer Oligomerisierungsgrad von 2 bis 10, besonders bevorzugt einer von 3 bis 5,
   und
(iv) gegebenenfalls einem organofunktionellen Siloxan, dessen Funktionalitäten gleich oder verschieden sind und jedes Si-Atom im Siloxan eine Funktionalität aus der Reihe Alkyl, d. h. linear, verzweigt oder cyclisch mit 1 bis 20 C-Atomen, Fluoralkyl, Cyanoalkyl, Isocyanoalkyl, Alkenyl, Aminoalkyl, Diaminoalkyl, Triaminoalkyl, Alkoxyalkyl, Hydroxyalkyl, Acylalkyl, Glycidyloxyalkyl, Acryloxyalkyl, Methacryloxyalkyl, Mercaptoalkyl, Ureidoalkyl, Aryl oder Alkoxy, vorzugsweise Methoxy oder Ethoxy, trägt und die verbleibenden freien Valenzen der Si-Atome im Siloxan durch Methoxy- oder Ethoxy- oder Hydroxy-Gruppen gesättigt sind,
   und
(v) gegebenenfalls einem weiteren organofunktionellen Silan der allgemeinen Formel II

   R'ₛR"ᵣSiY₍₄₋ₛ₋ᵣ₎ (II),

   worin die Gruppen R' und R" gleich oder verschieden sind und jeweils eine lineare, verzweigte oder cyclische Alkylgruppe mit 1 bis 20 C-Atomen, eine Chloralkyl-, Bromalkyl-, Jodalkyl-, Isocyanoalkyl-, Cyanoalkyl-, Fluoralkyl-bzw. Perfluoralkyl-, Alkenyl-, Aryl-, Acryloxyalkyl-, Methacryloxyalkyl-, Sulfan-, Mercaptoalkyl-, Thiacyamidalkyl-, Glycidyloxyalkyl-, Aminoalkyl-, Diaminoalkyl-, Triaminoalkyl-, Carbonatoalkyl- oder eine Ureidoalkyl-Gruppe darstellen, wobei die jeweilige Alkylen-Gruppen 1 bis 6 C-Atome enthält, R" vorzugsweise ein Methyl ist, Y eine Methoxy-, Ethoxy-, i-Propoxy-, n-Propoxy- oder 2-Methoxyethoxy-Gruppe darstellt und s gleich 1 oder 2 oder 3 und r gleich 0 oder 1 oder 2 sind, mit der Maßgabe (s+r) ≤ 3,
   in situ in einem im Wesentlichen flüssigen, härtbaren Kunstharz oder einer Vorläuferstufe eines Kunstharzes umsetzt.

Insbesondere, aber nicht ausschließlich kann man als organofunktionelle Silane gemäß (v) folgende Verbindungen einsetzen: Methyltrimethoxysilan (DYNASYLAN® MTMS), Methyltriethoxysilan (DYNASYLAN® MTES), Propyltrimethoxysilan (DYNASYLAN® PTMO), Propyltriethoxysilan (DYNASYLAN® PTEO), i-Butyltrimethoxysilan (DYNASYLAN® IBTMO), i-Butyltriethoxysilan (DYNASYLAN® IBTEO), Octyltrimethoxysilan (DYNASYLAN® OCTMO), Octyltriethoxysilan (DYNASYLAN® OCTEO), Hexadecyltrimethoxysilan (DYNASYLAN® 9116), Hexadecyltriethoxysilan (DYNASYLAN® 9216), 3-Chlorpropyltrialkoxysilane, 3-Brompropylalkoxysilane, 3-Jodpropylalkoxysilane, 3-Chlorpropyltrichlorsilane, 3-Chlorpropylmethyldialkoxysilane, 3-Chlorpropylmethyldichlorsilane, 3-Chlorpropyldimethylalkoxysilane, 3-Chlorpropyldimethylchlorsilane, 3-Aminopropylmethyldialkoxysilane, 3-Aminopropyltrialkoxysilane, u. a. 3-Aminopropyltrimethoxysilan (DYNASYLAN® AMMO), 3-Aminopropyltriethoxysilan (DYNASYLAN® AMEO), N-(n-Butyl)-3-aminopropyltrimethoxysilan (DYNASYLAN® 1189), n-Aminoethyl-3-aminopropylmethyldimethoxysilan (DYNASYLAN® 1411), 3-Aminopropylmethyldiethoxysilan (DYNASYLAN® 1505), N-Aminoethyl-3-aminopropylmethyldialkoxysilan, N-Aminoethyl-3-aminopropyltrimethoxysilan (DYNASYLAN® DAMO), triaminofunktionelles Propyltrimethoxysilan (DYNASYLAN® TRIAMO), u. a. [N-Aminoethyl-N'-(3-trialkoxysilylpropyl)]ethylendiamine sowie [N-Aminoethyl-N-(3-trialkoxysilylpropyl)]ethylendiamine, triaminofunktionelle Propylmethyldialkoxysilane, 3-(4,5-Dihydroimidazolyl)propyltriethoxysilan (DYNASYLAN® IMEO), 3-Methacryloxypropylalkoxysilane, 3-Methacryloxypropyltrimethoxysilan (DYNASYLAN® MEMO), 3-Methacryloxyisobutyltrialkoxysilane, 3-Glycidyloxypropyltrialkoxysilane, 3-Glycidyloxypropyltrimethoxysilan (DYNASYLAN® GLYMO), 3-Glycidyloxypropyltriethoxysilan (DYNASYLAN® GLYEO), 3-Mercaptopropylalkoxysilane, 3-Mercaptopropyltrimethoxysilan (DYNASYLAN® MTMO), Vinyltrialkoxysilane, u. a. Vinyltrimethoxysilan (DYNASYLAN® VTMO), Vinyltriethoxysilan (DYNASYLAN® VTEO), Vinyltris(2-methoxyethoxy)silan (DYNASYLAN® VTMOEO), Perfluoralkyltrialkoxysilane, Fluoralkyltrialkoxysilane, u. a. Tridecafluoroctyltrimethoxysilan, Tridecafluoroctyltriethoxysilan (DYNASYLAN® F 8261), Tridecafluoroctylmethyldialkoxysilane, Trimethylchlorsilan, Triethylchlorsilan, (H₅C₂O)₃Si(CH₂)₃-S₄-(CH₂)₃Si(OC₂H₅)₃ 1,4-Bis(3-triethoxysilylpropyl)tetrasulfan (Si-69), (H₅C₂O)₃Si(CH₂)₃-NCS 3-Thiacyamidopropyltriethoxysilan (Si-264), (H₅C₂O)₃Si(CH₂)₃-S₂-(CH₂)₃Si(OC₂H₅)₃ 1,2-Bis(3-triethoxysilylpropyl)disulfan (Si-266), 3-Cyanopropyltrialkoxysilane, u. a. 3-Cyanopropyltrimethoxysilan, N,N',N"-Tris(trimethoxysilylpropyl)triisocyanurat, 3-[Methoxy(polyethylenglycid)]propyltrialkoxysilane, Allyltrialkoxysilane, Allylmethyldialkoxysilan, Allyldimethylalkoxysilan, 3-Methacryloxy-2-methylpropyltrialkoxysilane, 3-Amino-2-methylpropyltrialkoxysilane, (Cyclohex-3-enyl)-ethyltrialkoxysilane, N-(3-Trialkoxysilylpropyl)alkylcarbamate, 3-Azidopropyltrialkoxysilane, 4-(2-Trialkoxysilylethyl)-1,2-epoxycyclohexane, Bis(3-alkoxysilylpropyl)amine, Tris(3-alkoxysilyl-propyl)amine, 3-Acryloxypropyltrialkoxysilane, u. a. 3-Acryloxymethyldialkoxysilan, 3-Acryloxydimethylalkoxysilan, wobei für eine der zuvor genannten Alkoxygruppen vorteilhaft Methoxy, Ethoxy, 2-Methoxyethoxy, Propoxy oder Acetoxy steht.

Geeigneterweise legt man beim erfindungsgemäßen Verfahren die in der Regel flüssigen Komponenten des Präpolymeren vor und erwärmt, gibt eine definierte Menge Wasser, gegebenenfalls Katalysator, gegebenenfalls Netzmittel sowie die siliciumorganischen Komponenten (ii) bis (v) zu und bringt im Anschluss daran die oxidische Komponente (i) unter guter Durchmischung ein. D. h., dass man geeigneterweise zunächst die Kunstharzkomponenten, Katalysator, Netzhilfsmittel, Wasser und die siliciumorganischen Komponenten, gegebenenfalls weitere Hilfsstoffe zusammenbringt, mischt und erst dann die oxidische Komponente (KA-O) zusetzt, wobei sich ein nach dieser Herstellweise erhaltenes Komponentengemisch insbesondere auch durch ein gutes Verarbeitungsverhalten auszeichnet.

Bevorzugt setzt man beim erfindungsgemäßen Verfahren 0,1 bis 60 Gew.-%, vorzugsweise 15 bis 50 Gew.-% , besonders vorzugsweise 20 bis 45 Gew.-%, ganz besonders vorzugsweise 25 bis 40 Gew.-%, insbesondere 30 bis 35 Gew.-%, nanoskaliges Oxid und/oder Mischoxid (KA-O), bezogen auf die Zusammensetzung, ein.

Vorzugsweise setzt man beim erfindungsgemäßen Verfahren ein nanoskaliges Oxid und/oder Mischoxid (KA-O) mit einem durchschnittlichen Partikeldurchmesser von 1 bis 100 nm, besonders vorzugsweise von 5 bis 50 nm und ganz besonders vorzugsweise von 10 bis 40 nm, ein. Dabei können die Oxide bzw. Mischoxide eine BET-Oberfläche von 40 bis 400 m²/g, vorzugsweise von 60 bis 250 m²/g, besonders vorzugsweise von 80 bis 250 m²/g, besitzen. Als nanoskalige Oxide oder Mischoxide kann man beispielsweise - aber nicht ausschließlich - pyrogene Kieselsäure, die durch weitere Metall- oder Halbmetallanteile modifiziert sein kann, wie Aluminium, Titan, Eisen oder Zirkon, einsetzen.

Ferner ist bevorzugt, dass man die oxidische Komponente (i) und mindestens eine silanbasierende Komponente, insbesondere (ii), (iii), (iv) und/oder (v), in einem Gewichtsverhältnis von 4 : 1 bis 1 : 1, besonders vorzugsweise von 3,5 : 1 bis 1,5 : 1, ganz besonders vorzugsweise von 3 :1 bis 2 : 1, einsetzt.

Als flüssiges bzw. härtbares Kunstharz oder als Vorläuferstufe eines flüssigen, härtbaren Kunstharzes, d. h. einem Präpolymer oder einem Gemisch aus Präpolymeren, verwendet man beim erfindungsgemäßen Verfahren beispielsweise Acrylate, Methacrylate, Epoxide, Epoxidharze, Polyurethane, Polyurethanharze, ungesättigte Polyester, ungesättigte Polyesterharze, Epoxyacrylate, Polyesteracrylate, Urethanacrylate, Siliconacrylate, polyfunktionelle monomere Acrylate, wie Trimethylolpropantriacrylat, Trimethylolpropantrimethacrylat, ethoxyliertes Trimethylolpropantriacrylat, propoxyliertes Trimethylolpropantriacrylat, Pentaerythrittriacrylat, ethoxyliertes Pentaerythritoltetraacrylat, alkoxylierte Tetraacrylate, Di-trimethylolpropantetraacrylate, 3,4-Epoxycyclohexan-1-carbonsäure-3,4-epoxycyclohexyl-1'-methylester, 1,6-Hexandioldiacrylat - um nur einige Beispiele zu nennen - oder Gemische aus zwei oder mehreren der zuvor genannten Kunstharze bzw. Präpolymeren, beispielsweise Gemische aus mono-und/oder bifunktionellen bzw. polyfunktionellen monomeren, gegebenenfalls niedrigviskosen Acrylaten.

Die erfindungsgemäße Umsetzung erfolgt in der Regel in Gegenwart einer wohl definierten Menge an Wasser. Vorzugsweise setzt man dazu pro Mol Si der siliciumorganischen Komponenten 1 bis 6 Mol Wasser ein.

Ferner wird die erfindungsgemäße Umsetzung bevorzugt in Gegenwart eines Katalysators durchgeführt. Als Katalysator ist insbesondere eine Säure geeignet, vorzugsweise Maleinsäureanhydrid, Maleinsäure, Essigsäure, Essigsäureanhydrid, Glycolsäure, Zitronensäure, Methansulfonsäure, Phosphorsäure.

Weiterhin kann der Einsatz eines Netzmittels für die Durchführung der erfindungsgemäßen Umsetzung hilfreich sein. So führt man die Umsetzung vorzugsweise in Gegenwart von Natriumdodecylsulfat durch.

Beim erfindungsgemäßen Verfahren wird die Umsetzung bevorzugt bei einer Temperatur im Bereich von 30 bis 100 °C, vorzugsweise bei einer Temperatur im Bereich von 50 bis 80 °C, durchgeführt.
Durch Hydrolyse und Kondensation entsteht bei der erfindungsgemäßen Umsetzung in der Regel ein Alkohol, den man vorzugsweise während der Umsetzung und/oder danach aus dem Reaktionssystem entfernt. Das Entfernen des bei der Umsetzung entstandenen Alkohols kann destillativ, geeigneterweise unter vermindertem Druck, durchgeführt werden. In der Regel wird dabei der Gehalt an Alkohol im Produktgemisch, d. h. in der durch die erfindungsgemäße Umsetzung erhaltenen Zusammensetzung, auf < 2 Gew.-%, vorzugsweise auf 0,01 bis 1 Gew.-%, besonders vorzugsweise auf 0,1 bis 0,5 Gew.-%, abgesenkt, sodass man in vorteilhafter Weise eine lösemittelfreie Zusammensetzung, d. h. eine lösemittelfreie Lackbasis bzw. einen lösemittelfreien Lack erhält.

Solche erfindungsgemäßen Zusammensetzungen können direkt oder nach Zugabe weiterer Lackkomponenten in hervorragender Weise für die kratzfeste Beschichtung von Substraten verwendet werden.

Gegenstand der vorliegenden Erfindung ist somit auch eine Zusammensetzung auf der Basis eines aushärtbaren Kunstharzes, die erfindungsgemäße bzw. erfindungsgemäß hergestellte polymerisierbare siliciumorganische Nanokapseln enthält.

Weiterhin ist Gegenstand der vorliegenden Erfindung eine Zusammensetzung oder ein Lack auf der Basis eines aushärtbaren Kunstharzes, die nach mindestens einem der Ansprüche 1 bis 19 erhältlich ist.

Geeigneterweise kann man der erfindungsgemäßen Zusammensetzung bzw. dem erfindungsgemäßen Lack weitere Komponenten zusetzen, beispielsweise Initiatoren für die photochemische Lackhärtung, Darocur® 1173, Lucirin® TPO-L, Lackstabilisatoren, wie HALS-Verbindungen, Tinuvine® sowie Antioxidantien, wie Irganox® . Solche Zusatzstoffe werden in der Regel in Mengen von 0,1 bis 5 Gew.-%, vorzugsweise von 2 bis 3 Gew.-%, bezogen auf die Zubereitung bzw. den Lack, eingesetzt. Das Einbringen weiterer Komponenten in das Lacksystem erfolgt geeigneterweise unter guter Durchmischung. Die erfindungsgemäßen Zubereitungen bzw. Lacke zeichnen sich vorteilhaft trotz eines hohen Gehalts an polymerisierbaren siliciumorganischen Nanokapseln vorzugsweise durch eine vergleichsweise geringe Viskosität von 500 bis 1.000 mPa s aus. Dabei verhalten sich die Systeme in der Regel dilatant.

Somit ist auch Gegenstand der Erfindung die Verwendung einer erfindungsgemäßen Zusammensetzung als Lack oder als Basis für die Herstellung einer Beschichtungszusammensetzung oder eines Lacks, insbesondere für Systeme zur Kratzfestbeschichtung.

Die Applikation der erfindungsgemäßen Zusammensetzung bzw. eines erfindungsgemäßen Lacks erfolgt in der Regel durch Aufbringen auf ein Substrat. Für die Beschichtung von Substraten kann man die üblichen Beschichtungsverfahren anwenden, wie z. B. Walzenauftrag, Aufrakeln, Tauchen, Fluten, Gießen, Spritzen, Aufstreichen.

Beispielsweise kann man die erfindungsgemäße Zubereitung bzw. den Lack auf bahnförmige Substrate, wie Papier oder Metall- bzw. Kunststofffolien, durch Einsatz eines Walzauftragswerks gleichmäßig auftragen und anschließend härten. Geeigneterweise kann man die Beschichtung bei Umgebungstemperatur, d. h. Lacktemperatur, durch ein UV- oder Elektronenstrahlverfahren (ESH) umweltfreundlich, da lösemittelfrei, aushärten.

Bevorzugt erzeugt man für die Elektronenstrahl-Härtung Elektronen mit einer Energie von rd. 140 keV, wobei die Dosis bei 30 bis 60 kGy, vorzugsweise 40 bis 50 kGy, liegt. Vorzugsweise liegt der O₂-Restgehalt bei < 200 ppm. Geeigneterweise führt man die photochemische Härtung unter Schutzgas aus, beispielsweise unter Stickstoff oder Argon.

Man kann die Lackhärtung aber auch mittels UV-Bestrahlung durch Einsatz von mono- oder polychromatischen UV-Lampen mit einer Wellenlänge von 150 bis 400 nm durchführen. Auch bei der UV-Härtung kann man bei Umgebungstemperatur, beispielsweise zwischen 10 und 60 °C, arbeiten. Auch hierbei liegt der O₂-Gehalt geeigneterweise bei < 200 ppm.
So kann man durch den Einsatz erfindungsgemäßer Zusammensetzungen bzw. Lacke in besonders vorteilhafter Weise hervorragend kratzfeste Beschichtungen erzeugen. Darüber hinaus besitzen erfindungsgemäße Beschichtungen auch eine gute Abriebbeständigkeit. Die Bestimmung der Ritzhärte bzw. Kratzfestigkeit erfolgt hier in der Regel gemäß DIN 53 799 unter Verwendung einer Hartmetallkugel. Der Abrieb kann beispielsweise nach DIN 52 347 unter Einsatz beschichteter Planscheiben erfolgen.

Somit ist ebenfalls Gegenstand der vorliegenden Erfindung ein Verfahren zur Herstellung einer kratzfesten Beschichtung, das dadurch gekennzeichnet ist, dass man eine erfindungsgemäße Zusammensetzung oder einen erfindungsgemäßen Lack auf einen Untergrund bzw. ein Substrat aufbringt und vorzugsweise photochemisch aushärtet. Man kann aber auch chemisch, beispielsweise oxidativ, aushärten, beispielsweise durch Einsatz von Peroxid und höherer Temperatur.

Gegenstand der vorliegenden Erfindung sind ferner kratzfeste Beschichtungen, die erhältlich sind durch Aufbringen einer erfindungsgemäßen Zusammensetzung oder eines erfindungsgemäßen Lacks nach mindestens einem der Ansprüche 20 bis 25.

Erfindungsgemäße Beschichtungen weisen vorzugsweise eine Schichtdicke von 1 bis 100 µm, besonders vorzugsweise von 2 bis 40 µm und ganz besonders vorzugsweise von 5 bis 15 µm, auf.

So kann man in besonders einfacher und wirtschaftlicher Weise beispielsweise Metalle, wie Aluminium, Eisen, Stahl, Messing, Kupfer, Silber, Magnesium, Leichtmetalllegierungen, Holz, Papier, Pappe, Textilien, Steinwaren, Kunststoffe, Thermoplaste, Polycarbonat, Glas, Keramik, mit einer besonders kratzfesten Beschichtung ausstatten. Die Auswahl der im Wesentlichen festen Substratmaterialien zur Beschichtung ist uneingeschränkt. Solche Substrate können beispielsweise mit einer Schutzbeschichtung ausgestattet werden, so genanntes "Topcoating", wie es beispielsweise als Klarlacksystem in der Automobilindustrie angewendet wird.

Insbesondere sind nach dem vorliegenden Beschichtungsverfahren in einfacher und wirtschaftlicher Weise kratzfest ausgestattete Artikel, wie Dekorpapier, Aluminiumfolien, Polycarbonat-Autoscheiben, PVC-Fensterrahmen, Türen, Arbeitsplatten, um nur einige zu nennen, erhältlich.

Erfindungsgemäßes Dekorpapier wird beispielsweise für eine gleichzeitig kostengünstige, kratzfeste und optisch vorteilhafte Oberflächengestaltung von Möbeln verwendet.

Weiterhin sind Gegenstand der vorliegenden Erfindung Artikel mit einer erfindungsgemäßen Beschichtung, die nach einem der Ansprüche 20 bis 25 erhältlich sind. Insbesondere ist Gegenstand der vorliegenden Erfindung ein Dekorpapier, das nach einem der Ansprüche 20 bis 25 erhältlich ist.

Die vorliegende Erfindung wird durch die nachfolgenden Beispiele näher erläutert:

### Beispiele

### Einsatzstoffe:

| **Partikel Kern A** | | | |
|---|---|---|---|
| **Rohstoff** | | **mittlere Partikelgröße** | **Oberfläche nach BET** (DIN 66 131; in m²/g) |
| pyrogenes Siliciumdioxid | AEROSIL® 200 | 14 nm | 200 ± 20 |

| **Umhüllung B** | |
|---|---|
| **Rohstoff** | |
| Vinyltrimethoxysilan | DYNASYLAN® VTMO |
| Vinyltriethoxysilan | DYNASYLAN® VTEO |
| 3-Methacryloxypropyltrimethoxysilan | DYNASYLAN® MEMO |

| **Organisches Substrat/Kunstharzkomponente** | |
|---|---|
| Ethoxyliertes Pentaerythritoltetraacrylat | Sartomer® 494 |

| **Hilfsstoffe** | |
|---|---|
| Katalysator | Maleinsäureanhydrid |
| Netzmittel | Natriumdodecylsulfat |
| Reaktand | Wasser |

### Beispiel 1

### 18,0 Gew.-Teile AEROSIL 200 / 9,0 Gew.-Teile DYNASYLAN VTMO / 73,0 Gew.-Teile Sartomer 494:

In einem Rührgefäß werden 29,2 kg Sartomer 494 (Fa. Cray Valley) sowie 16 g 4-Hydroxyanisol vorgelegt und auf 65 bis 70 °C erwärmt. Zum erwärmten Acrylat werden eine Lösung von 0,15 kg Maleinsäureanhydrid und 0,072 kg Natriumdodecylsulfat in 1,44 kg Wasser sowie innerhalb von 30 Minuten 3,6 kg DYNASYLAN VTMO gegeben. Anschließend dosiert man im oben angegebenen Temperaturbereich unter intensivem Rühren 7,2 kg AEROSIL 200 innerhalb von 1 bis 2 Stunden. Man rührt noch eine Stunde bei 65 bis 70 °C weiter und entfernt unter vermindertem Druck Methanol aus dem System. Zuletzt wird der Ansatz auf Raumtemperatur abgekühlt.

### Beispiel 2

### 18,0 Gew.-Teile AEROSIL 200 / 11,6 Gew.-Teile DYNASYLAN VTEO / 70,4 Gew.-Teile Sartomer 494:

In einem Rührgefäß werden 29,2 kg Sartomer 494 (Fa. Cray Valley) sowie 48 g 4-Hydroxyanisol vorgelegt und auf 65 bis 70°C erwärmt. Zum erwärmten Acrylat werden eine Lösung von 0,15 kg Maleinsäureanhydrid und 0,075 kg Natriumdodecylsulfat in 1,5 kg Wasser sowie innerhalb von 30 Minuten 4,81 kg DYNASYLAN VTEO gegeben. Anschließend dosiert man im oben angegebenen Temperaturbereich unter intensivem Rühren 7,466 kg AEROSIL 200 innerhalb von einer Stunde. Man rührt noch 3 Stunden bei 65 bis 70 °C weiter und entfernt unter vermindertem Druck Ethanol aus dem System. Zuletzt wird der Ansatz auf Raumtemperatur abgekühlt.

### Beispiel 3

### 18,0 Gew.-Teile AEROSIL 200 / 9,0 Gew.-Teile DYNASYLAN MEMO / 73,0 Gew.-Teile Sartomer 494:

In einem Rührgefäß werden 29,2 kg Sartomer 494 (Fa. Cray Valley) sowie 16 g 4-Hydroxyanisol vorgelegt und auf 65 bis 70 °C erwärmt. Zum erwärmten Acrylat werden eine Lösung von 0,15 kg Maleinsäureanhydrid und 0,0262 kg Natriumdodecylsulfat in 0,5246 kg Wasser sowie innerhalb von 30 Minuten 3,6 kg DYNASYLAN MEMO gegeben. Anschließend dosiert man im oben angegebenen Temperaturbereich unter intensivem Rühren 7,2 kg AEROSIL 200 innerhalb von 1 bis 2 Stunden. Man rührt noch 60 Minuten bei 65 bis 70 °C weiter und entfernt unter vermindertem Druck Methanol aus dem System. Zuletzt wird der Ansatz auf Raumtemperatur abgekühlt.

### Anwendungsbeispiele

Die Lacke aus den Beispielen 1 bis 3 werden auf quadratische PVC-Platten (Kantenlänge 10 cm, Dicke 2 mm) mit einem Rakel der Spaltbreite 50 µm manuell aufgebracht und im Niederenergieelektronenbeschleuniger (140 keV) mit einer Dosis von 50 kGy ausgehärtet. Der Sauerstoffrestgehalt im Beschleuniger betrug < 200 ppm. Ebenso wird mit Sartomer 494 verfahren (Vergleichsbeispiel). Die Proben werden auf ihre Ritzhärte gemäß DIN 53 799 unter Einsatz einer Hartmetallkugel (Durchmesser 1 mm)getestet. Ferner werden die Proben auf Abriebfestigkeit gemäß DIN 52 347 und ASTM D-1044 getestet. Dabei erfolgte die Bestimmung der Abriebfestigkeit durch Lichtstreuungsmessung (Haze) nach 100 bzw. 500 Taber-Umdrehungen (2 Reibräder CS-10, umhüllt mit Schmirgelpapier S-42, F = 5,5 ± 0,2 M, 3 Einzelmessungen, arithmetisches Mittel). Die Versuchsergebnisse sind in Tabelle 1 zusammengestellt.

**Tabelle 1**

| Gegenüberstellung der Testergebnisse aus den Anwendungsbeispielen | | | |
|---|---|---|---|
| **Beispiele** | **Rezeptur** | **Mengenverhältnis Harz : SiO2 : Silan [Gew.-Teile]** | Eigenschaften der Beschichtung (Bewertung) **A: Ritzhärte [N]** **B: Haze [%]** |
| (DS VTMO) Beispiel 1 | 29,2 kg Sartomer 494 7,2 kg Aerosil 200 3,6 kg DS VTMO Maleinsäureanhydrid | 73,0 : 18,0 : 9,0 | A: 9,0 N (sehr gut) B: 2,9/6,4 (gut) |
| (DS VTEO) Beispiel 2 | 29,2 kg Sartomer 494 7,466 kg Aerosil 200 4,82 kg DS VTEO Maleinsäureanhydrid | 70,4 : 18,0 : 11,6 | A: 8,5 N (gut) B: 3,5/7,9 (noch gut) |
| (DS MEMO) Beispiel 3 | 29,2 kg Sartomer 494 7,2 kg Aerosil 200 3,6 kg DS MEMO Maleinsäureanhydrid | 73,0 : 18,0 : 9,0 | A: 8,5 N (gut) B: 4,1/8,6 (schlechter als Bsp. 1 und 2) |
| (Sartomer 494 auf PVC) Vergleichs - beispiel | 100 % Sartomer 494 | 100 | A: 6,0 N (schlecht) B: 20,3/61,4 (sehr schlecht) |

| **Beispiele** | **Rezeptur** | **Mengenverhältnis Harz : SiO2 : Silan [Gew.-Teile]** | Eigenschaften der Beschichtung (Bewertung) **A: Ritzhärte [N] B: Haze [%]** |
|---|---|---|---|
| PVC Substrat | - | - | A: 4,0 N (sehr schlecht) B: 101,2/127,5 (sehr schlecht) |

## Patentansprüche

1. Polymerisierbare siliciumorganische Nanokapseln, bestehend aus einem nanoskaligen Kern A, welcher mindestens ein Oxid und/oder Mischoxid (KA-O) mindestens eines Metalls oder Halbmetalls der zweiten bis sechsten Hauptgruppe, der ersten bis achten Nebengruppe des Periodensystems der Elemente oder der Lanthanide enthält, und einer siliciumorganischen Umhüllung B, wobei die siliciumorganische Umhüllung B mindestens einen siliciumorganischen Bestandteil der allgemeinen Formel la
(Si'O-)ₓSi-R (Ia),
worin R für eine Vinyl- oder Allylgruppe steht und x eine Zahl von 0 bis 20 ist, wobei die noch freien Valenzen von Si durch SiO- und/oder -Z und die freien Valenzen von Si' durch SiO-, -R und/oder -Z gesättigt sind, die Gruppen Z gleich oder verschieden sind und Hydroxy- oder Alkoxy-Reste darstellen, und jedes Si bzw. Si' der Umhüllung B maximal eine Gruppe R trägt,
enthält und/oder der siliciumorganische Bestandteil der Umhüllung B über eine oder mehrere kovalente Bindungen der allgemeinen Formel Ib
(KA-O)-[(Si'O-)ₓSi-R] (Ib)
worin R für eine Vinyl- oder Allylgruppe steht und x eine Zahl von 0 bis 20 ist, wobei die noch freien Valenzen von Si durch (KA-O)-, SiO- und/oder -Z und die freien Valenzen von Si' durch (KA-O)-, SiO-, -R und/oder -Z gesättigt sind, die Gruppen Z gleich oder verschieden sind und Hydroxy-oder Alkoxy-Reste darstellen, und jedes Si bzw. Si' der Umhüllung B maximal eine Gruppe R trägt,
an den Kern A (KA-O) gebunden ist.

2. Polymerisierbare siliciumorganische Nanokapseln erhältlich durch eine Umsetzung von
(i) mindestens einem nanoskaligen Oxid und/oder Mischoxid (KA-O) mindestens eines Metalls oder Halbmetalls der zweiten bis sechsten Hauptgruppe, der ersten bis achten Nebengruppe des Periodensystems der Elemente oder der Lanthanide
mit
(ii) einem Vinyltrialkoxysilan und/oder einem Allyltrialkoxysilan, wobei Alkoxy für eine Methoxy-, Ethoxy-, n-Propoxy- oder i-Propoxygruppe steht,
und
(iii) gegebenenfalls einem monomeren und/oder oligomeren Kieselsäureester, der Methoxy-, Ethoxy-, n-Propoxy- oder i-Propoxygruppen trägt und einen mittleren Oligomerisierungsgrad von 1 bis 50 aufweist,
und
(iv) gegebenenfalls einem organofunktionellen Siloxan, dessen Funktionalitäten gleich oder verschieden sind und jedes Si-Atom im Siloxan eine Funktionalität aus der Reihe Alkyl, Fluoralkyl, Cyanoalkyl, Isocyanoalkyl, Alkenyl, Aminoalkyl, Diaminoalkyl, Triaminoalkyl, Alkoxyalkyl, Hydroxyalkyl, Acylalkyl, Glycidyloxyalkyl, Acryloxyalkyl, Methacryloxyalkyl, Mercaptoalkyl, Ureidoalkyl, Aryl oder Alkoxy, trägt und die verbleibenden freien Valenzen der Si-Atome im Siloxan durch Methoxy- oder Ethoxy- oder Hydroxy-Gruppen gesättigt sind,
und
(v) gegebenenfalls einem weiteren organofunktionellen Silan der allgemeinen Formel II
R'ₛR"ᵣSiY₍₄₋ₛ₋ᵣ₎ (II),
worin die Gruppen R' und R" gleich oder verschieden sind und jeweils eine lineare, verzweigte oder cyclische Alkylgruppe mit 1 bis 20 C-Atomen, eine Chloralkyl-, Bromalkyl-, Jodalkyl-, Isocyanoalkyl-, Cyanoalkyl-, Fluoralkyl-, Alkenyl-, Aryl-, Acylalkyl-, Acryloxyalkyl-, Methacryloxyalkyl-, Sulfan-, Mercaptoalkyl-, Thiacyamidalkyl-, Glycidyloxyalkyl-, Aminoalkyl-, Diaminoalkyl-, Triaminoalkyl-, Carbonatoalkyl- oder eine Ureidoalkyl-Gruppe darstellen, wobei die jeweilige Alkylen-Gruppen 1 bis 6 C-Atome enthält, Y eine Methoxy-, Ethoxy-, i-Propoxy-, n-Propoxy- oder 2-Methoxyethoxy-Gruppe darstellt und s gleich 1 oder 2 oder 3 und r gleich 0 oder 1 oder 2 sind, mit der Maßgabe (s+r) ≤ 3,
in situ in einem flüssigen, härtbaren Kunstharz oder einer Vorläuferstufe eines Kunstharzes.

3. Nanokapseln nach Anspruch 1 oder 2,
**dadurch gekennzeichnet,**
**dass** der Kern A ein Oxid und/oder Mischoxid (KA-O) aus der Reihe der Elemente Si, Al, Ti und/oder Zr darstellt.

4. Nanokapseln nach einem der Ansprüche 1 bis 3,
**gekennzeichnet durch**
einen mittleren Durchmesser der Kapseln von 10 bis 400 nm.

5. Verfahren zur Herstellung von polymerisierbaren siliciumorganischen Nanokapseln nach einem der Ansprüche 1 bis 4,
**dadurch gekennzeichnet,**
**dass** man
(i) mindestens ein nanoskaliges Oxid und/oder Mischoxid (KA-O) mindestens eines Metalls oder Halbmetalls der zweiten bis sechsten Hauptgruppe, der ersten bis achten Nebengruppe des Periodensystems der Elemente oder der Lanthanide
mit
(ii) einem Vinyltrialkoxysilan und/oder einem Allyltrialkoxysilan, wobei Alkoxy für eine Methoxy-, Ethoxy-, n-Propoxy- oder i-Propoxygruppe steht,
und
(iii) gegebenenfalls einem monomeren und/oder oligomeren Kieselsäureester, der Methoxy-, Ethoxy-, n-Propoxy- oder i-Propoxygruppen trägt und einen mittleren Oligomerisierungsgrad von 1 bis 50 aufweist,
und
(iv) gegebenenfalls einem organofunktionellen Siloxan, dessen Funktionalitäten gleich oder verschieden sind und jedes Si-Atom im Siloxan eine Funktionalität aus der Reihe Alkyl, Fluoralkyl, Cyanoalkyl, Isocyanoalkyl, Alkenyl, Aminoalkyl, Diaminoalkyl, Triaminoalkyl, Alkoxyalkyl, Hydroxyalkyl, Acylalkyl, Glycidyloxyalkyl, Acryloxyalkyl, Methacryloxyalkyl, Mercaptoalkyl, Ureidoalkyl, Aryl oder Alkoxy, trägt und die verbleibenden freien Valenzen der Si-Atome im Siloxan durch Methoxy- oder Ethoxy- oder Hydroxy-Gruppen gesättigt sind,
und
(v) gegebenenfalls einem weiteren organofunktionellen Silan der allgemeinen Formel II
R'ₛR"ᵣSiY₍₄₋ₛ₋ᵣ₎ (II),
worin die Gruppen R' und R" gleich oder verschieden sind und jeweils eine lineare, verzweigte oder cyclische Alkylgruppe mit 1 bis 20 C-Atomen, eine Chloralkyl-, Bromalkyl-, Jodalkyl-, Isocyanoalkyl-, Cyanoalkyl-, Fluoralkyl-, Alkenyl-, Aryl-, Acylalkyl-, Acryloxyalkyl-, Methacryloxyalkyl-, Sulfan-, Mercaptoalkyl-, Thiacyamidalkyl-, Glycidyloxyalkyl-, Aminoalkyl-, Diaminoalkyl-, Triaminoalkyl-, Carbonatoalkyl- oder eine Ureidoalkyl-Gruppe darstellen, wobei die jeweilige Alkylen-Gruppen 1 bis 6 C-Atome enthält, Y eine Methoxy-, Ethoxy-, i-Propoxy-, n-Propoxy- oder 2-Methoxyethoxy-Gruppe darstellt und s gleich 1 oder 2 oder 3 und r gleich 0 oder 1 oder 2 sind, mit der Maßgabe (s+r) ≤ 3,
in situ in einem flüssigen, härtbaren Kunstharz oder einer Vorläuferstufe eines Kunstharzes umsetzt.

6. Verfahren nach Anspruch 5,
**dadurch gekennzeichnet,**
**dass** man ein nanoskaliges Oxid und/oder Mischoxid (KA-O) mit einem durchschnittlichen Partikeldurchmesser von 1 bis 100 nm einsetzt.

7. Verfahren nach Anspruch 5 oder 6,
**dadurch gekennzeichnet,**
**dass** man als härtbares Kunstharz oder Vorläuferstufe eines härtbaren Kunstharzes ein Acrylat, Methacrylat, Epoxid, Epoxidharz, Polyurethan, Polyurethanharz, ungesättigte Polyester, ungesättigtes Polyesterharz, Epoxyacrylat, Polyesteracrylat, Urethanacrylat, Siliconacrylate oder Gemische aus zwei oder mehreren der zuvor genannten Komponenten verwendet.

8. Verfahren nach einem der Ansprüche 5 bis 7,
**dadurch gekennzeichnet,**
**dass** man 0,1 bis 60 Gew.-% nanoskaliges Oxid und/oder Mischoxid (KA-O), bezogen auf das Kunstharz, einsetzt.

9. Verfahren nach einem der Ansprüche 5 bis 8,
**dadurch gekennzeichnet,**
**dass** man die oxidische Komponente (i) und mindestens eine silanbasierende Komponente (ii), (iii), (iv) und/oder (v) in einem Gewichtsverhältnis von 4 : 1 bis 1 : 1 einsetzt.

10. Verfahren nach einem der Ansprüche 5 bis 9,
**dadurch gekennzeichnet,**
**dass** man die Umsetzung in Gegenwart eines Katalysators durchführt.

11. Verfahren nach einem der Ansprüche 5 bis 10,
**dadurch gekennzeichnet,**
**dass** man die Umsetzung in Gegenwart von Wasser durchführt.

12. Verfahren nach einem der Ansprüche 5 bis 11,
**dadurch gekennzeichnet,**
**dass** man die Umsetzung in Gegenwart eines Netzmittels durchführt.

13. Verfahren nach einem der Ansprüche 5 bis 12,
**dadurch gekennzeichnet,**
**dass** man die Umsetzung bei einer Temperatur im Bereich von 30 bis 100 °C durchführt.

14. Verfahren nach einem der Ansprüche 5 bis 13,
**dadurch gekennzeichnet,**
**dass** man
- das härtbare Kunstharz oder eine Vorläuferstufe eines härtbaren Kunstharzes vorlegt und erwärmt,
- Katalysator, gegebenenfalls Netzmittel und Wasser zugibt,
- Komponenten (ii) bis (v) einbringt und anschließend
- Komponente (i) unter guter Durchmischung zusetzt.

15. Verfahren nach einem der Ansprüche 5 bis 14,
**dadurch gekennzeichnet,**
**dass** man während der Umsetzung und/oder danach den entstandenen Alkohol aus dem Reaktionssystem entfernt.

16. Verfahren zur Herstellung einer Zusammensetzung auf der Basis eines aushärtbaren Kunstharzes, die polymerisierbare siliciumorganische Nanokapseln enthält, indem man das härtbare Kunstharz oder eine Vorläuferstufe eines härtbaren Kunstharzes vorlegt und erwärmt, Katalysator, gegebenenfalls Netzmittel und definierte Mengen Wasser zugibt, mindestens eine siliciumorganische Komponente der allgemeinen Formel III
R¹R² ₙSiX₃₋ₙ (III),
wobei die Gruppen R¹ und R² gleich oder verschieden sind, R¹ für eine Alkenylgruppe mit 2 bis 18 C-Atomen, eine Aryl-, Alkylaryl-, eine Acylalkyl-, eine Arylalkyl-, eine Aminoalkyl-, eine Diaminoalkyl-, eine Triaminoalkyl-, eine Alkyloxyalkyl-, eine Cyanoalkyl-, eine Isocyanoalkyl-, eine Glycidoxyalkyl-, eine Acylalkyl-, eine Acyloxyalkyl-, eine Acryloxyalkyl-, eine Mercaptoalkyl-, eine Polysulfidalkyl- oder eine Methacryloxyalkylgruppe steht, R² die gleiche wie für R¹ aufgezählte Bedeutung besitzt oder für eine lineare, verzweigte oder cyclische Alkylgruppe mit 1 bis 20 C-Atomen, die gegebenenfalls substituiert ist, steht,
und
gegebenenfalls einem monomeren und/oder oligomeren Kieselsäureester, der Methoxy-, Ethoxy-, n-Propoxy- oder i-Propoxygruppen trägt und einen mittleren Oligomerisierungsgrad von 1 bis 50 aufweist,
und
gegebenenfalls einem organofunktionellen Siloxan, dessen Funktionalitäten gleich oder verschieden sind und jedes Si-Atom im Siloxan eine Funktionalität aus der Reihe Alkyl, Fluoralkyl, Cyanoalkyl, Isocyanoalkyl, Alkenyl, Aminoalkyl, Diaminoalkyl, Triaminoalkyl, Alkoxyalkyl, Hydroxyalkyl, Acylalkyl, Glycidyloxyalkyl, Acryloxyalkyl, Methacryloxyalkyl, Mercaptoalkyl, Ureidoalkyl, Aryl oder Alkoxy trägt und die verbleibenden freien Valenzen der Si-Atome im Siloxan durch Methoxy- oder Ethoxy- oder Hydroxy-Gruppen gesättigt sind,
zugibt, mischt und nachfolgend mindestens ein nanoskaliges Oxid und/oder Mischoxid (KA-O) mindestens eines Metalls oder Halbmetalls der zweiten bis sechsten Hauptgruppe, der ersten bis achten Nebengruppe des Periodensystems der Elemente oder der Lanthanide unter guter Durchmischung zusetzt, wobei man den durch Hydrolyse und/oder Kondensation entstehenden Alkohol aus dem System entfernt.

17. Verfahren nach Anspruch 16,
**dadurch gekennzeichnet,**
**dass** man als siliciumorganische Komponente 3-Methacryloxypropyltrimethoxysilan, 3-Methacryloxypropyltriethoxysilan, 3-Methacryloxypropylmethyldimethoxysilan, 3-Methacryloxypropylmethyldiethoxysilan, 3-Methacryloxy-2-methyl-propyltrimethoxysilan, 3-Methacryloxy-2-methyl-propyltriethoxysilan, Vinyltrimethoxysilan, Vinyltriethoxysilan, Vinylmethyldimethoxysilan oder Vinylmethyldiethoxysilan einsetzt.

18. Verfahren nach Anspruch 16 oder 17,
**dadurch gekennzeichnet,**
**dass** man eine nanoskalige Kieselsäure als Oxidkomponente (KA-O) einsetzt.

19. Verfahren nach einem der Ansprüche 16 bis 18,
**dadurch gekennzeichnet,**
**dass** man pro Mol Si der siliciumorganischen Komponente 0,5 bis 6 Mol Wasser einsetzt.

20. Zusammensetzung auf der Basis eines aushärtbaren Kunstharzes oder einer Vorläuferstufe eines härtbaren Kunstharzes erhältlich nach mindestens einem der Ansprüche 1 bis 19.

21. Zusammensetzung auf der Basis eines aushärtbaren Kunstharzes oder einer Vorläuferstufe eines härtbaren Kunstharzes, die polymerisierbare siliciumorganische Nanokapseln nach einem der Ansprüche 1 bis 20 enthält.

22. Zusammensetzung nach Anspruch 21 mit einem SiO₂-Gehalt der Oxidkomponente (KA-O) bis 60 Gew.-%, bezogen auf die Zusammensetzung.

23. Verwendung einer Zusammensetzung nach den Ansprüchen 20 bis 22 als Lack oder als Basis für die Herstellung einer Beschichtungszusammensetzung oder eines Lacks.

24. Verfahren zur Herstellung einer kratzfesten Beschichtung,
**dadurch gekennzeichnet,**
**dass** man eine Zusammensetzung oder einen Lack nach einem der Ansprüche 20 bis 23 auf ein Substrat aufbringt und photochemisch aushärtet.

25. Verfahren nach Anspruch 24,
**dadurch gekennzeichnet,**
**dass** man eine Zusammensetzung oder einen Lack mittels UV- oder Elektronenstrahlen bei einer Temperatur im Bereich von 10 bis 60 °C aushärtet.

26. Kratzfeste Beschichtung, erhältlich durch Aufbringen einer Zusammensetzung auf ein Substrat nach mindestens einem der Ansprüche 20 bis 25.

27. Artikel mit einer kratzfesten Beschichtung, erhältlich nach einem der Ansprüche 20 bis 25.

28. Dekorpapier, erhältlich nach einem der Ansprüche 20 bis 25.
